# FASCICULE DE BREVET EUROPEEN

(11) **EP 1 579 182 B1**
(45) Date de publication et mention de la délivrance du brevet: **09.08.2006**
(21) Numéro de dépôt: 03786067.3
(22) Date de dépôt: 25.11.2003
(51) Int. Cl.: G01G 19/00, G01G 19/414, B07C 5/16

(54) **DISPOSITIF POUR LA PESEE DYNAMIQUE D ENVOIS POSTAUX**
VORRICHTUNG ZUM DYNAMISCHEN WIEGEN VON POSTSENDUNGEN
DEVICE FOR THE DYNAMIC WEIGHING OF POSTAL ITEMS

(30) Priorité: 23.12.2002 FR 0216551
(43) Date de publication de la demande: 28.09.2005
(73) Titulaire: Solystic, 94257 Gentilly Cedex (FR)
(72) Inventeur: MARISY, Stéphane, F-26000 Valence (FR); DANJAUME, Alain, F-26300 Besayes (FR); GAUDRIAUD, Bernard, F-26800 Beauvallon (FR)
(74) Mandataire: Prugneau, Philippe
(86) Numéro de dépôt international: PCT/FR2003/050131
(87) Numéro de publication internationale: WO 2004/059263

(56) Documents cités:
- EP-B- 0 881 956
- WO-A-01/02278
- FR-A- 2 795 396

## Description

L'invention concerne un dispositif pour la pesée dynamique d'envois postaux comprenant une platine posée flottante sur un capteur de poids et un convoyeur à bandes monté sur la platine pour déplacer les envois postaux selon une direction longitudinale de convoyage, le convoyeur comprenant deux bandes de convoyage parallèles qui s'étendent selon la direction de convoyage entre une entrée et une sortie de convoyage et entre lesquelles les envois postaux sont pincés et déplacés en série sur chant.

Un tel dispositif est connu du document EP-0881956. Il est plus particulièrement destiné à équiper une machine de tri postal dans laquelle les envois postaux sont déplacés en série sur chant à une vitesse de l'ordre de 3,15 m/s et avec un débit qui se situe entre 3 et 6 envois postaux par seconde. Ce type de dispositif peut servir de moyen supplémentaire pour définir, vérifier et contrôler l'affranchissement apposé sur les envois postaux. Le poids mesuré pour chaque envoi postal peut également servir de critère de tri dans la machine de tri.

Dans le dispositif connu pour la pesée dynamique, les deux bandes de convoyage sont engagées sur des galets rotatifs rigides disposés à l'entrée et à la sortie de convoyage et sont décalées l'une de l'autre selon la direction de convoyage de sorte que chaque envoi postal pénètre entre les deux bandes de convoyage de façon oblique par rapport à la direction de convoyage sur la platine. Il en résulte que chaque envoi postal subit une déformation lorsqu'il pénètre en entrée dans le convoyeur et lorsqu'il quitte le convoyeur. Cet agencement connu n'est pas adapté pour peser de façon fiable des envois postaux dont l'épaisseur peut varier sur une large plage. En effet, au moins pour les envois postaux de forte épaisseur et/ou rigides, la déformation des plis en entrée du convoyeur provoque des chocs mécaniques et des vibrations qui perturbent la précision de la mesure. Ce système ne permet pas le traitement des objets postaux très rigides.

Le but de l'invention est de proposer un dispositif pour la pesée dynamique d'envois postaux qui soit capable de peser avec une bonne fiabilité et une grande précision un large spectre d'envois postaux ayant une épaisseur pouvant varier entre 0,23mm à 32mm et un poids pouvant varier entre moins de 20g et 2000g.

A cet effet, l'invention a pour objet un dispositif pour la pesée dynamique d'envois postaux comprenant une platine posée flottante sur un capteur de poids et un convoyeur à bandes monté sur la platine pour déplacer les envois postaux selon une direction longitudinale de convoyage, le convoyeur comprenant deux bandes de convoyage parallèles qui s'étendent selon la direction de convoyage entre une entrée et une sortie de convoyage et entre lesquelles les envois postaux sont pincés et déplacés en série sur chant, caractérisé en ce que les deux bandes de convoyage sont engagées sur une paire de premières roues à ailettes élastiquement déformables disposées à l'entrée du convoyeur en étant alignées perpendiculairement à la direction longitudinale et sur une paire de secondes roues à ailettes élastiquement déformables disposées à la sortie du convoyeur en étant alignées perpendiculairement à la direction longitudinale et en ce que le capteur de poids a un fonctionnement basé sur le principe électromagnétique de la compensation de flux.

Avec cet agencement, les envois postaux sont déplacés entre l'entrée et la sortie de convoyage selon une direction sensiblement rectiligne et ne subissent donc pas de déformations le long du trajet de convoyage. On réduit les vibrations mécaniques dans le dispositif selon l'invention en montant les roues à ailettes sur des axes fixes sur la platine et en utilisant un capteur de poids fonctionnant selon le principe électromagnétique de la compensation de flux. Avec ce dispositif, les envois postaux pénètrent dans le convoyeur en passant entre les deux premières roues à ailettes et les chocs provoqués par les envois postaux pincés entre ces deux roues à ailettes sont absorbés par la déformation élastique de ces roues à ailettes. Il en est de même en sortie du convoyeur. Avec cet agencement, on réduit le nombre de pièces en mouvement dans un dispositif pour la pesée dynamique ce qui favorise l'obtention d'une grande précision de la mesure sur un large spectre d'envois postaux. De plus, la réduction du nombre de pièces permet de réduire la tare du dispositif de pesée.

Le dispositif de pesée dynamique selon l'invention présente les particularités suivantes :
- une cinquième roue à ailettes élastiquement déformable est disposée entre les premières roues à ailettes et les secondes roues à ailettes pour pincer les deux bandes contre une plaque de référence s'étendant selon la direction longitudinale ;
- les premières et secondes roues à ailettes ont un diamètre plus petit que celui de la cinquième roue à ailettes ;
- une cellule de détection est disposée entre la paire de premières roues à ailettes et la cinquième roue à ailettes pour détecter le passage des envois postaux le long de la direction longitudinale, les signaux de la cellule étant utilisés pour commander le capteur de poids.

L'invention s'étend à une machine de tri postal comprenant un dispositif pour la pesée dynamique tel que défini plus haut.

Un exemple de réalisation d'un dispositif pour la pesée dynamique d'envois postaux selon l'invention est décrit ci-après et illustré par les dessins.

La figure 1 montre schématiquement, vu de dessus, un dispositif pour la pesée dynamique d'envois postaux selon l'invention.

La figure 2 illustre la relation entre le signal de commande produit par la cellule de détection de passage et le signal de pesée produit par le capteur de poids.

La figure 3 est un organigramme simplifié illustrant le fonctionnement du dispositif pour la pesée dynamique d'envois postaux selon l'invention.

La figure 4 est un schéma illustrant le principe de la mesure de poids par compensation de flux.

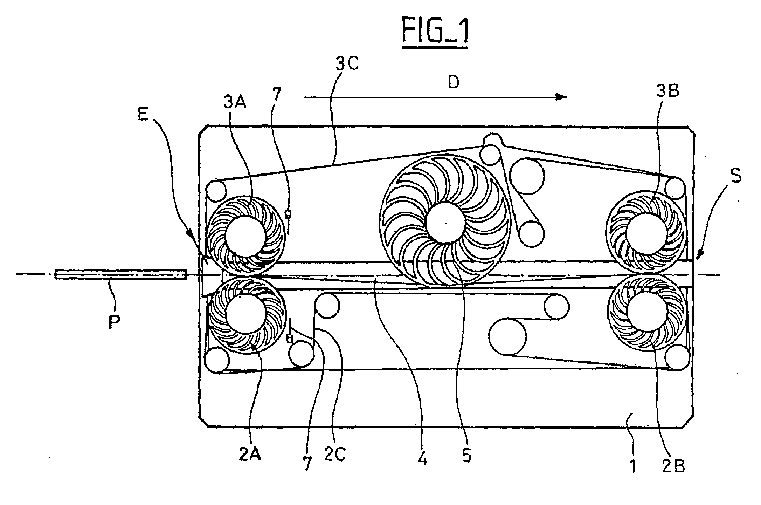

La figure 1 montre un convoyeur à bandes monté sur une platine 1 qui est posée flottante sur un capteur de poids (non visible sur la figure 1). La platine 1 est une plaque de forme sensiblement rectangulaire.

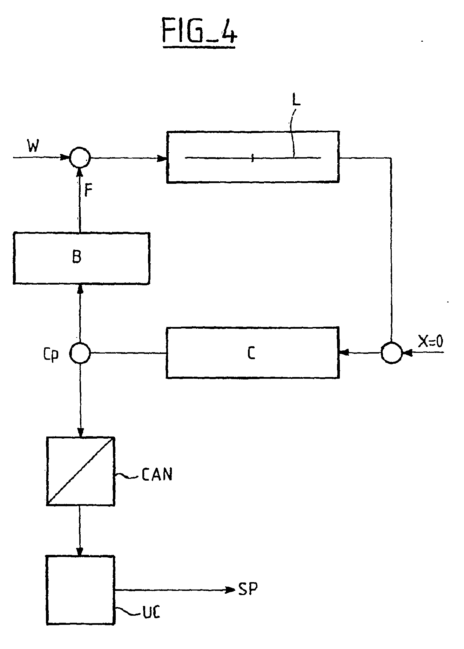

Le capteur de poids a un fonctionnement basé sur le principe électromagnétique de la compensation de flux. Le principe de la mesure par compensation de flux, encore appelé MFR (Magnetic Force Restoration) est illustré sur la figure 4. La charge appliquée W sur une extrémité d'un levier L est compensée de façon active par une force contre-productive électromagnétique F provoquée par un courant de compensation cp à travers une bobine électrique B placée à l'autre extrémité du levier. Une commande de précision C garde le système stable pour qu'il fonctionne sans mouvement vertical. Le courant de compensation cp est envoyé dans un processeur UC, par l'intermédiaire d'un convertisseur haute résolution analogique/numérique CAN, qui fournit une information numérique représentative du poids de la charge W. Dans le dispositif selon l'invention, on pourra utiliser quatre leviers placés respectivement aux quatre coins de la platine, le courant de compensation produit par les commandes de précision étant envoyé vers le processeur UC. Dans cet agencement, le centre de gravité de la platine équipée du convoyeur à bandes est situé à l'applomb du capteur de poids recevant les leviers.

Le convoyeur à bandes selon l'invention comprend une paire de premières roues à ailettes 2A,3A dont la jante est élastiquement déformable radialement. Ces roues à ailettes 2A,3A sont disposées à l'entrée E du convoyeur en étant alignées perpendiculairement à la direction longitudinale D de convoyage des envois postaux sur la platine 1. Le convoyeur à bandes comprend également une paire de seconde roues à ailettes à jante élastiquement défomable radialement 2B,3B disposées à la sortie S du convoyeur 1 en étant alignées perpendiculairement à la direction D. Comme visible sur la figure 1, les deux roues à ailettes 2A,3A sont placées l'une contre l'autre pour pincer les envois postaux . II en est de même des roues à ailettes 2B,3B.

Une première bande de convoyage 2C est engagée sur les roues à ailettes 2A,2B et une seconde bande de convoyage 3C est engagée sur les roues à ailettes 3A,3B.

Les deux bandes de convoyage 2C,3C s'étendent parallèlement l'une à l'autre selon la direction de convoyage D et bloquent par serrage les envois postaux pour les déplacer sur chant en série selon la direction D. Les bandes de convoyage sont entraînées en mouvement par l'intermédiaire d'un moteur électrique autonome (non représenté) fixé sur la platine 1.

Avec cet agencement du convoyeur à roues à ailettes, chaque envoi postal tel que P pénètre en entrée du convoyeur en passant entre les deux roues à ailettes 2A,3A et quitte le convoyeur en passant entre les deux roues à ailettes 2B,3B. L'envoi postal suit donc entre l'entrée et la sortie du convoyeur un trajet sensiblement rectiligne qui s'étend selon la direction D.

Pour réduire le lâcher des envois postaux en entrée et en sortie du convoyeur, on utilisera de préférence des roues à ailettes de petit diamètre, par exemple des roues à ailettes ayant un diamètre de l'ordre de 150mm.

La longueur du convoyeur entre l'entrée E et la sortie S est de l'ordre de 500 à 900 mm. Le pied des envois postaux est guidé sur la platine 1 par une goulotte 4 qui s'étend le long de la direction D. Cette goulotte 4 a une largeur légèrement supérieure à l'épaisseur maximale d'un envoi postal, dans le cas présent 32 mm.

Elle présente à l'entrée E du convoyeur une extrémité évasée. Comme visible sur la figure 1, les roues à ailettes 2A à 3B sont disposées sur la platine de telle manière que les deux bandes parallèles 2C,3C soient disposées dans un plan traversant la goulotte 4 en son milieu et dans lequel est situé le centre de gravité de la platine équipée (et donc le capteur de poids).

Une cinquième roue à ailettes à jante élastiquement déformable radialement 5 est en outre disposée entre la paire de roues à ailettes 2A,3A et la paire de roues à ailettes 2B,3B pour pincer les deux bandes 2C,3C contre une paroi latérale de la goulotte 4 qui sert de plaque de référence, ce qui évite tout glissement des envois postaux pendant leur convoyage selon la direction D. La roue à ailettes 5 a un diamètre extérieur supérieur aux roues 2A à 3B, ici de l'ordre de 250mm car elle doit subit un écrasement du double de celui des roues à ailettes 2A à 3B.

Une cellule de détection de passage 7, par exemple à diode émettrice et réceptrice, est disposée entre les roues 2A,3A et la roue 5 pour détecter le passage des envois postaux dans le convoyeur. Les signaux de détection fournis par la cellule 7 servent à commander le capteur de poids comme décrit ci-après. Une contre poulie ou une sixième roue à ailettes telle que 5 peut être prévue en regard de la roue 5 afin d'améliorer le fonctionnement du système de pesée.

Les roues à ailettes 2A à 3B et 5 ont des axes de rotation fixes sur la platine.

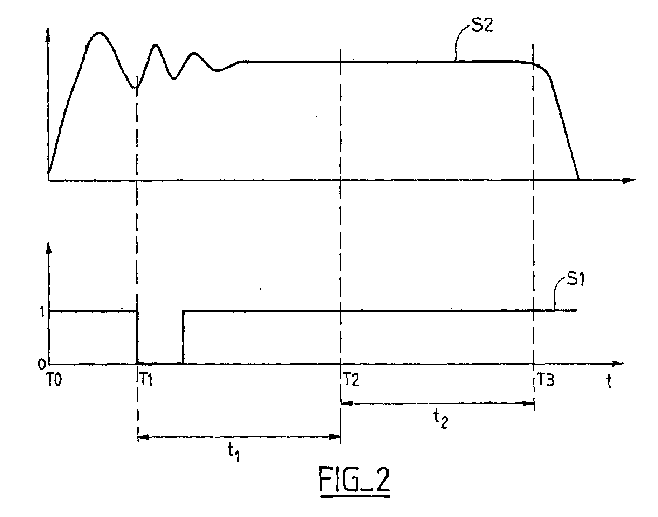

Sur la figure 2, S1 représente le signal qui est fourni par la cellule de détection 7. Le signal S1 présente une transition à un instant T1 qui correspond à l'instant de détection par la cellule 7 du passage du front avant d'un envoi postal. S2 représente le signal analogique de mesure fourni par la commande de précision d'un capteur de pesée. A l'instant T0, l'envoi postal pénètre dans le convoyeur. A l'instant T2, il se trouve entre la paire de roues 2A,3A et la paire de roues 2B,3B et à l'instant T3, le front avant de l'envoi postal arrive à l'extrémité S du convoyeur.

II apparaît sur la figure 2, que le signal S2 oscille entre les instants T0 et T1 et devient stable à partir de l'instant T2.

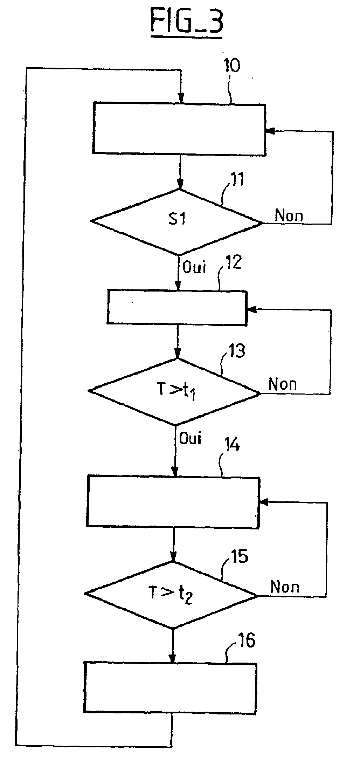

Le diagramme sur la figure 3 illustre le fonctionnement du dispositif de pesée et en particulier du processeur UC représenté sur la figure 4.

Le processeur UC est dans une boucle d'attente 10,11 tant que le signal S1 n'indique pas une détection de passage d'un envoi postal par la cellule 7.

Sur détection d'une transition du signal S1 en 11, le processeur UC se met dans une boucle d'attente 12,13 tant qu'une temporisation de t1 (T2-T1) n'est pas écoulée. A l'issue de la temporisation de t1, le processeur UC entre dans une boucle de numérisation en 14 du signal S2 pendant un délai t2 (égal à T3-T2) décompté en 15.

Suite à quoi, le processeur UC calcule en 16 la valeur du poids de l'envoi postal (par exemple en faisant une moyenne des valeurs instantanées du signal S2 mesurées entre les instants T2 et T3) et recommence le traitement en 10 pour un nouvel envoi postal. En pratique, et compte tenu de la vitesse de déplacement des envois postaux à 3,15m/s et de la longueur de la platine d'environ 750mm, t1 sera d'environ 150 ms et t2 sera d'environ 88 ms.

Des essais ont montré qu'avec le dispositif de pesée selon l'invention, il est possible de peser de façon dynamique avec une précision inférieure à 10 grammes et avec un taux d'erreur inférieur à 1,1%, des envois postaux déplacés à une vitesse moyenne de 3,15m/s et à une cadence d'environ 3 à 6 envois par seconde et dont l'épaisseur varie entre 0,23mm et 32mm, dont la longueur varie entre 140mm et 400mm, dont la hauteur varie entre 90mm et 300mm et dont le poids varie entre moins de 20g et 2000g.

Bien entendu, le dispositif selon l'invention pourrait être utilisé pour peser de façon dynamique des envois postaux de petit format ainsi que d'autres types d'objets plats déplacés à vitesse constante en série sur chant.

## Revendications

1. Un dispositif pour la pesée dynamique d'envois postaux (P) comprenant une platine (1) posée flottante sur un capteur de poids et un convoyeur à bandes monté sur la platine pour déplacer les envois postaux selon une direction longitudinale de convoyage (D), le convoyeur comprenant deux bandes de convoyage parallèles (2C,3C) qui s'étendent selon la direction de convoyage entre une entrée (E) et une sortie (S) de convoyage et entre lesquelles les envois postaux sont pincés et déplacés en série sur chant, **caractérisé en ce que** les deux bandes de convoyage sont engagées sur une paire de premières roues à ailettes élastiquement déformables (2A,3A) disposées à l'entrée (E) du convoyeur en étant alignées perpendiculairement à la direction longitudinale (D) de convoyage des envois postaux (P) et sur une paire de secondes roues à ailettes élastiquement déformables (2B,3B) disposées à la sortie (S) du convoyeur en étant alignées perpendiculairement à la direction longitudinale (D) de convoyage des envois postaux (P) et **en ce que** le capteur de poids a un fonctionnement basé sur le principe électromagnétique de la compensation de flux.

2. Le dispositif selon la revendication 1, comprenant une cinquième roue à ailettes élastiquement déformable (5) qui est disposée entre les premières roues à ailettes et les secondes roues à ailettes pour pincer les deux bandes de convoyage contre une plaque de référence (4) s'étendant selon la direction longitudinale.

3. Le dispositif selon la revendication 2, dans lequel les premières et secondes roues à ailettes ont un diamètre plus petit que celui de la cinquième roue à ailettes.

4. Le dispositif selon l'une des revendications 2 ou 3, comprenant une cellule de détection (7) disposée entre les premières roues à ailettes et la cinquième roue à ailettes pour détecter le passage des envois postaux le long de la direction longitudinale, les signaux (S1) de la cellule étant utilisés pour commander le capteur de poids.

5. Machine de tri postal comprenant un dispositif selon l'une des revendications 1 à 4.

## Claims

1. A device for dynamically weighing postal items (P), the device comprising a plate (1) floatingly mounted on a weight sensor, and a conveyor belt mounted on the plate to move postal items in a longitudinal conveyor direction (D), the conveyor comprising two parallel conveyor belts (2C, 3C) extending along the conveyor direction between a conveyor inlet (E) and a conveyor outlet (S), with the postal items being pinched therebetween and being moved in series standing on their edges, the device being **characterized in that** the two conveyors belts are engaged on a pair of first elastically deformable finned wheels (2A, 3A) disposed at the inlet (E) of the conveyor and aligned perpendicularly to the longitudinal conveyor direction of the postal items, and on a pair of second elastically deformable finned wheels (2B, 3B) disposed at the outlet (S) of the conveyor and aligned perpendicularly to the longitudinal conveyor direction of the postal items (P), and **in that** the operation of the weight sensor is based on the electromagnetic principle of flux compensation.

2. The device of claim 1, including a fifth elastically deformable finned wheel (5) disposed between the first finned wheels and the second finned wheels to pinch the two conveyor belts against a reference plate (4) extending in the longitudinal direction.

3. The device according to claim 2, in which the first and second finned wheels are of diameter smaller than the diameter of the fifth finned wheel.

4. The device according to claim 2 or claim 3, including a detector cell (7) exposed between the first finned wheels and the fifth finned wheel in order to detect postal items passing along the longitudinal direction, the signals (S1) from the cell being used for controlling the weight sensor.

5. A postal sorting machine including a device according to any one of claims 1 to 4.

## Patentansprüche

1. Vorrichtung zum dynamischen Wiegen von Postsendungen (P), umfassend eine Grundplatte (1), die schwimmend auf einem Gewichtssensor abgelegt ist und einen Bandförderer, der auf der Grundplatte montiert ist, um die Postsendungen gemäß einer Längsrichtung der Förderung (D) zu verlagern, wobei der Förderer zwei parallele Förderbänder (2C, 3C) umfasst, die sich entlang der Richtung der Förderung zwischen einem Fördereingang (E) und einem Förderausgang (S) erstrecken, und zwischen welchen die Postsendungen geklemmt werden und sequenziell auf der Kante verlagert werden,
**dadurch gekennzeichnet,**
**dass** die beiden Förderbänder auf einem Paar von ersten elastisch deformierbaren Flügelrädern (2A, 3A), die an dem Fördereingang (E) angeordnet und senkrecht zu der Längsrichtung (D) der Förderung der Postsendungen ausgerichtet sind, und auf einem Paar von zweiten elastisch deformierbaren Flügelrädern (2B, 3B), die an dem Förderausgang (S) angeordnet und senkrecht zu der Längsrichtung (D) der Förderung der Postsendungen (P) ausgerichtet sind, eingesetzt sind, und
**dass** der Gewichtssensor eine Funktionsweise aufweist, die auf dem elektromagnetischen Prinzip der Flusskompensation basiert.

2. Vorrichtung nach Anspruch 1, umfassend ein fünftes elastisch deformierbares Flügelrad (5), welches zwischen den ersten Flügelrädern und den zweiten Flügelrädern angeordnet ist, um die beiden Förderbänder gegen eine Referenzplatte (4) zu klemmen, die sich in Längsrichtung erstreckt.

3. Vorrichtung nach Anspruch 2, in welcher die ersten und zweiten Flügelräder einen kleineren Durchmesser aufweisen als der des fünften Flügelrads.

4. Vorrichtung nach einem der Ansprüche 2 oder 3, umfassend eine Sensorzelle (7), die zwischen den ersten Flügelrädern und dem fünften Flügelrad angeordnet ist, um den Durchgang von Postsendungen entlang der Längsrichtung zu erfassen, wobei Signale (S1) der Zelle verwendet werden zum Steuern des Gewichtssensors.

5. Postsortiermaschine, umfassend eine Vorrichtung nach einem der Ansprüche 1 bis 4.
